# EUROPEAN PATENT SPECIFICATION

(11) **EP 1 654 476 B1**
(45) Date of publication and mention of the grant of the patent: **31.12.2008**
(21) Application number: 04742938.6
(22) Date of filing: 17.06.2004
(51) Int. Cl.: F16F 15/139

(54) **TWIN MASS FLYWHEELS**
ZWEIMASSENSCHWUNGRÄDER
VOLANTS MOTEUR A MASSES JUMELEES

(30) Priority: 18.06.2003 GB 0314090
(43) Date of publication of application: 10.05.2006
(73) Proprietor: Automotive Products S.p.A., Spontini, Ancona (IT)
(72) Inventor: GALLAGHER, Paul, Andrew, Monsano, I-60030 Ancona (IT); RIBICHINI, Andrea, Catelbellino, I-60030 Ancona (IT); CARACINI, Pietro, Via G. Pascoli, 8, Spontini, I-60030 Ancona (IT)
(74) Representative: Morrall, Roger
(86) International application number: PCT/GB2004/002577
(87) International publication number: WO 2004/113759

(56) References cited:
- DE-A- 3 628 773
- DE-A- 19 903 033
- US-A- 4 727 767
- US-A- 4 729 465
- US-A- 6 083 107
- US-A- 6 120 380

## Description

This invention relates to twin mass flywheels (hereinafter referred to as being of the type described) having an input mass for connection with an engine, an output mass for connection with a transmission, bearing means supporting the masses for limited relative rotation, and circumferentially acting damping means acting between the masses to damp said relative rotation.

Twin mass flywheels of the type described are well known and conventionally include as part of the damping means a friction damper whose frictional resistance varies with the angle of relative rotation of the flywheel masses. US-A-4729465 discloses such a flywheel in which the masses are supported for relative rotation on a ball bearing which also axially locates the two masses.

It is an object of the present invention to provide a twin mass flywheel of the type described which uses a plain bearing to support the masses and which provides an improved form of frictional damping which assists in resisting axial movement of the masses.

Thus, in accordance with the present invention, there is provided a twin mass flywheel having an input mass for connection with an engine, an output mass for connection with a transmission, bearing means supporting the masses for limited relative rotation, an annular radially extending flange connected adjacent its outer or inner periphery with the input mass and a pair of annular side plates located on either side of the flange are connected at their inner or outer peripheries with the output mass, circumferentially extending spring means acting between the flange and the side plates to damp relative rotation between the flywheel masses, and circumferentially acting friction damping means acting between the masses to damp said relative rotation, said friction damping means including a first friction damper which operates during relative rotation between the flywheel masses in a first angular range and includes one or more friction members which are axially loaded into frictional contact by a first axially acting spring means, and a second friction damper which operates with the first friction damper after the first angular range of relative rotation between the masses and which includes one or more further friction members axially loaded into frictional contact by a second axially acting spring means, the flywheel being characterised in that the bearing means is a plain bearing and in that the first friction damper comprises a first friction member which is axially biased into contact with the side plate on the engine side of the flange by the first axially acting spring acting between the flange and said first friction member.

The second friction damper may comprise interleaved friction members rotatable with the side plates and flange respectively which are located between the side plates and biased into frictional contact by the second axially acting spring means which is also located between the side plates.

In a further construction a still further friction member may be provided between the side plate on the engine side of the flange and the input flywheel mass, said side plate being axially biased towards said input flywheel mass by the first axially acting spring means to provide further frictional resistance which forms part of the first friction damper. Also, this further friction member forms an abutment surface which helps to axially locate the dampers and the flywheel masses.

One embodiment of the present invention will now be described, by way of example only, with reference to the accompanying drawings in which:
Figure 1 shows an axial section through a twin mass flywheel in accordance with the present invention;
Figure 2 shows a view on arrows C-C of figure 1 with part of the output flywheel mass cut away and showing some internal details in section;
Figure 2a shows an edge view on arrow X of Figure 2;
Figure 3 shows details of a belleville spring and associated friction member which forms part of a first friction damper;
Figure 4 shows details of an alternative bearing arrangement, and
Figure 5 shows details of a variant in which the bearing support is formed as a separate component from the input flywheel mass.

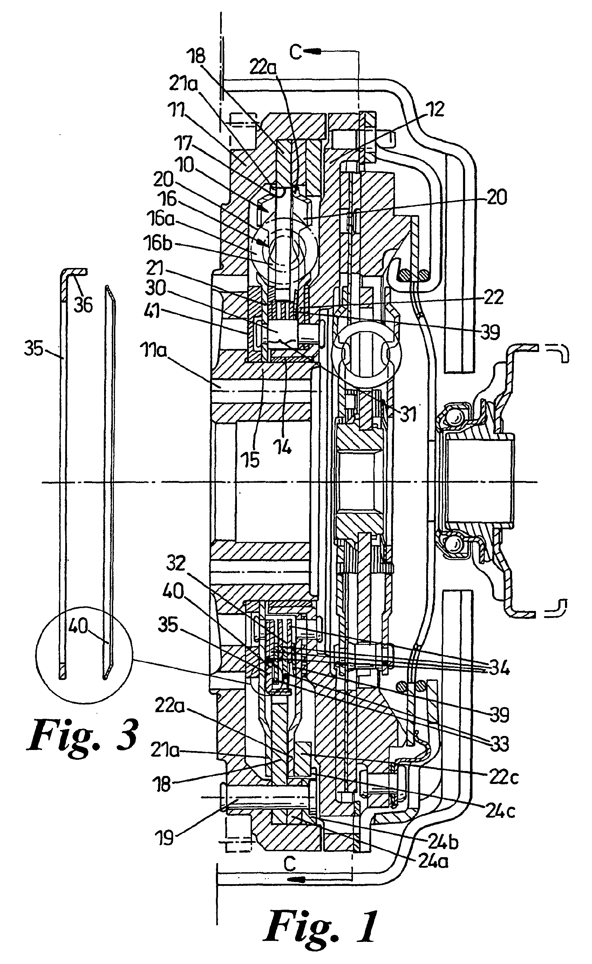

Referring to Figure 1 this shows a twin mass flywheel 10 having an input mass 11 for connection with an engine crankshaft via bolt holes 11 a and an output mass 12 supported from the input mass 11 via a plain bearing 14 which is carried on an axially extending tubular extension 15 of the input mass 11.

The output mass 12 can rotate through a limited circumferential distance relative to the input mass 11 under the control of compression springs 16. These springs (which may individually comprise two co-axial coils 16a and 16b to achieve the desired spring rate/characteristics) are housed in windows 17 in a flange 18 which is riveted at 19 to input mass 11 and in windows 20 in side plates 21 and 22 positioned on either side of the flange 18 and riveted to output mass 12 at 30, the rivets 30 including a spacing portion 31 to hold plates 21 and 22 apart.

Inside the side plates a friction device 32 is provided which comprises a first friction disc 35 having axial projections 36 which are keyed to flange 18 for rotation therewith. Friction disc 35 is acted on by a first axially acting belleville spring 40 which acts against flange 18 and biases disc 35 into contact with the inside of side plate 21. The same belleville spring 40 also loads a further friction disc 41 of plastics material (provided between side plate 21 and flywheel mass 11), against flywheel mass 11, effectively pressing the side plate 21 and thus the output mass 12 towards the input mass 11.

The friction device also includes a pair of friction discs 33 which are keyed at their outer peripheries within the radially inner portion of flange 18 and interleaved friction discs 34 which are keyed at their inner peripheries onto rivets 30. A second axially acting belleville spring 39 acts against the plate 22 and biases discs 33 and 34 against the inside of side plate 21.

The friction device 32 thus effectively forms a first damper constituted by discs 35 and 41 and side plate 21 which are loaded by first belleville spring 40 and a second damper constituted by discs 33 and 34 which are loaded by second belleville spring 39. These two dampers each have their own axially acting spring and can therefore have their frictional resistance tuned completely separately from each other.

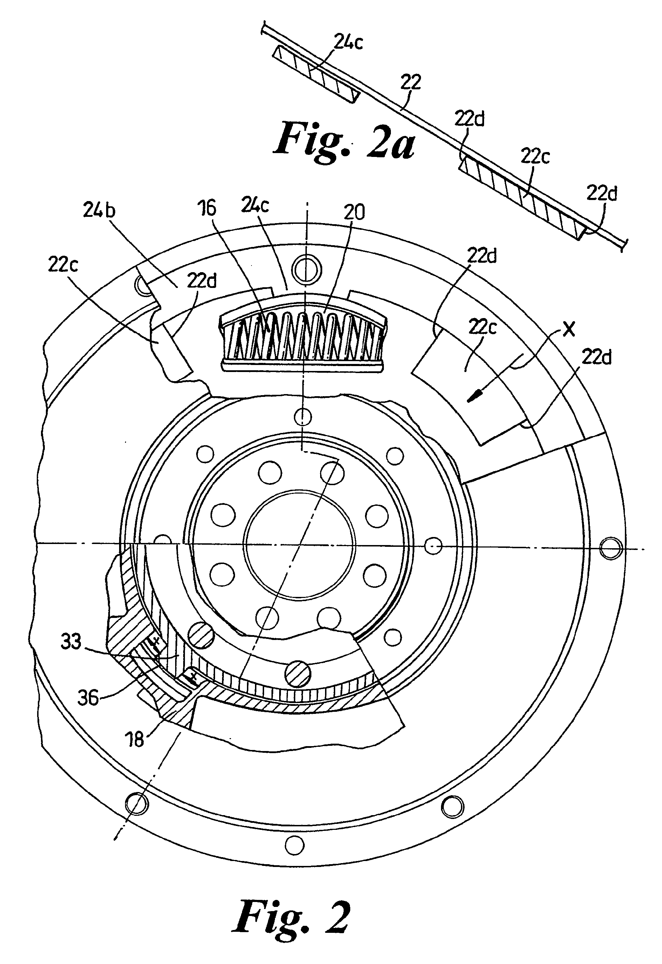

The keying of friction disc 35 to flange 18 by projections 36 may be without any lost circumferential motion and the level of friction generated by friction disc 35 and plastics disc 41 can be arranged to be relatively low so that a so-called idle rattle friction suppression is provided for the twin mass flywheel. The keying of the discs 33 and 34 to their co-operating members 18 and 30 may be with or without lost motion in the circumferential sense (see lost motion 'x' shown in Figure 2) and the second damper can be arranged to provide a higher level of frictional resistance which varies (increases) as the angle of relative rotation of the flywheel masses increases to provide the desired frictional characteristics of the damper during the normal driving stage of the flywheel.

The provision of friction members 35 and 41 loaded by belleville spring 40 helps to control any tendency for the side plate 21 to tip relative to flange 18 during operation of the flywheel. This in turn helps to control tipping of the input and output masses 11 and 12 relative to each other.

The flywheel also includes a stop arrangement to limit the relative rotation of the flywheel masses 11 and 12. This stop arrangement is provided by radially inwardly extending projections 24c on outer added mass ring 24b (see Figure 2). Rotation is limited when projections 24c strike the sides 22d of blocks 22c on side plate 22. Typically this rotation is limited to 24 degrees in either direction (ie, 48 degrees total relative rotation).

In the arrangement shown in the drawings the outer peripheral portions 21a and 22a of the side plates 21 and 22 contact the radially outer portion 18a of flange 18 to resist tipping of the input and output masses of the flywheel due to flexing of the crankshaft etc. However, the level of tipping control provided by friction members 35 and 41 and their associated belleville spring 40 may be sufficient to render the contact between the outer peripheral portions 21a and 22a of the side plates and flange 18 unnecessary.

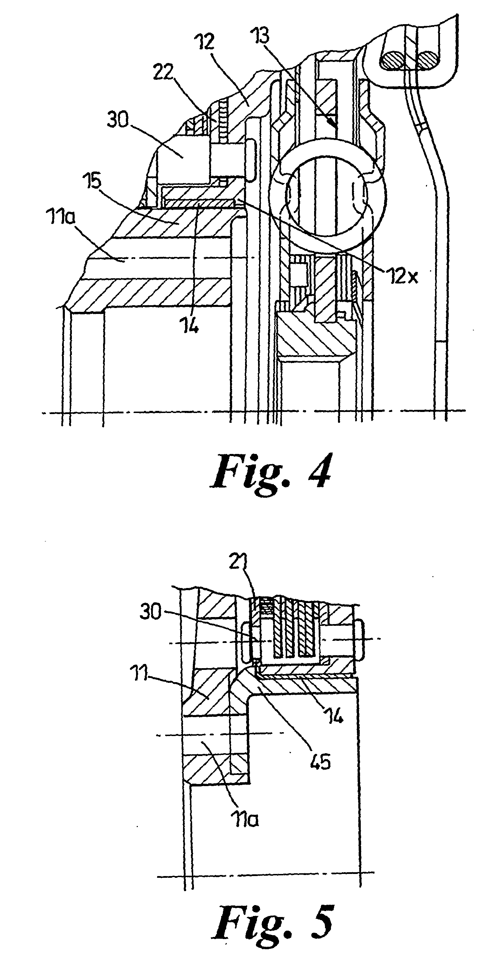

Figure 4 also shows a modified bearing arrangement in which the output flywheel 12 is provided with a flange 12x which provides a locating abutment for the bearing 14 which is pressed into the output mass. This arrangement obviates the need to form the bearing with an L-shaped cross-section making it cheaper and easier to produce.

Referring to Figure 5, this shows a further variant of the twin mass flywheel in which the bearing 14 is supported from a separate axially extending projection 45 which is pre-assembled to input mass 11, for example, welding or screwing, prior to the attachment of the twin mass flywheel to the vehicle crankshaft by the bolts which extend through bolt holes 11 a. This construction is cheaper to produce and may also save weight.

## Claims

1. A twin mass flywheel (10) having an input mass (11) for connection with an engine, an output mass (12) for connection with a transmission, bearing means (14) supporting the masses for limited relative rotation, an annular radially extending flange (18) connected adjacent its outer or inner periphery with the input mass (11) and a pair of annular side plates (21,22) located on either side of the flange are connected (30) at their inner or outer peripheries with the output mass (12), circumferentially extending spring means acting between the flange and the side plates to damp relative rotation between the flywheel masses, and circumferentially acting friction damping means (32) acting between the masses to damp said relative rotation, said friction damping means including a first friction damper (21,35,41) which operates during relative rotation between the flywheel masses in a first angular range and includes one or more friction members which are axially loaded into frictional contact by a first axially acting spring means (40), and a second friction damper (33,34) which operates with the first friction damper after the first angular range of relative rotation between the masses and which includes one or more further friction members axially loaded into frictional contact by a second axially acting spring means (39), the flywheel being **characterised in that** the bearing means (14) is a plain bearing and **in that** the first friction damper comprises a first friction member (35) which is axially biased into contact with the side plate (21) on the engine side of the flange (18) by the first axially acting spring (40) acting between the flange (18) and said first friction member (35).

2. A twin mass flywheel according to claim 1 **characterised in that** the second friction damper comprises interleaved friction members (33,34) rotatable with the side plates (21,22) and flange (18) respectively which are located between the side plates (21,22) and biased into frictional contact by the second axially acting spring means (39) which is also located between the side plates

3. A twin mass flywheel according to claim 1 or 2 **characterised in that** a still further friction member (41) is provided between said one side plate (21) and the associated flywheel mass (11), said one side plate (21) being axially biased towards said one flywheel mass (11) by the first axially acting spring means (40) to provide further frictional resistance which forms part of the first friction damper.

## Patentansprüche

1. Zweimassenschwungrad (10), das eine Eingangsmasse (11) zur Verbindung mit einem Motor, eine Ausgangsmasse (12) zur Verbindung mit einem Getriebe, eine die Massen für eine begrenzte Relativdrehung abstützende Lagereinrichtung (14), einen ringförmigen, radial sich erstreckenden Flansch (18), der angrenzend an seinen äußeren oder inneren Rand mit der Eingangsmasse (11) verbunden ist, ein Paar ringförmiger Seitenscheiben (21, 22), die auf jeder Seite des Flansches angeordnet und an ihren inneren oder äußeren Rändern mit der Ausgangsmasse (12) verbunden (30) sind, in Umfangsrichtung sich erstreckende Federmittel, die zwischen dem Flansch und den Seitenscheiben wirken, um Relativdrehungen zwischen den Schwungradmassen zu dämpfen, und eine in Umfangsrichtung wirkende Reibungsdämpfungseinrichtung (32) hat, die zwischen den Massen wirkt, um die Relativdrehung zu dämpfen, wobei die Reibungsdämpfungseinrichtung einen ersten Reibungsdämpfer (21, 35, 41), der während einer Relativdrehung zwischen den Schwungradmassen in einem ersten Winkelbereich wirkt und ein oder mehrere Reibungselemente enthält, die von einem ersten axial wirkenden Federmittel (40) axial in Reibungskontakt gedrückt wird, und einen zweiten Reibungsdämpfer (33, 34) enthält, der zusammen mit dem ersten Reibungsdämpfer nach dem ersten Winkelbereich relativer Drehung zwischen den Massen wirkt und der ein oder mehrere weitere Reibungselemente enthält, die von einem zweiten axial wirkenden Federmittel (39) axial in Reibungskontakt gedrückt werden, wobei das Schwungrad **dadurch gekennzeichnet ist, dass** die Lagereinrichtung (14) ein Gleitlager ist und dass der erste Reibungsdämpfer ein erstes Reibungselement (35) aufweist, das in Kontakt mit der Seitenscheibe (21) auf der Motorseite des Flansches (18) durch die erste axial wirkende Feder (40), die zwischen dem Flansch (18) und dem ersten Reibungselement (35) wirkt, axial vorgespannt wird.

2. Zweimassenschwungrad nach Anspruch 1, **dadurch gekennzeichnet, dass** der zweite Reibungsdämpfer ineinander verschachtelte Reibungselemente (33, 34) aufweist, die zusammen mit den Seitenscheiben (21, 22) und dem Flansch (18) jeweils drehbar, zwischen den Seitenscheiben (21, 22) angeordnet und von dem zweiten axial wirkenden Federmittel (39), das auch zwischen den Seitenscheiben angeordnet ist, in Reibungskontakt vorgespannt sind.

3. Zweimassenschwungrad nach Anspruch 1 oder 2, **dadurch gekennzeichnet, dass** ein noch weiteres Reibungselement (41) zwischen der einen Seitenscheibe (21) und der zugehörigen Schwungradmasse (11) vorgesehen ist, wobei die eine Seitenscheibe (21) von dem ersten axial wirkenden Federmittel (40) in Richtung auf die eine Schwungradmasse (11) axial vorgespannt ist, um weiteren Reibungswiderstand zu schaffen, der Teil des ersten Reibungsdämpfers ist.

## Revendications

1. Volant moteur à masses jumelées (10) ayant une masse d'entrée (11) destinée à être reliée à un moteur, une masse de sortie (12) destinée à être reliée à une transmission, un moyen d'appui (14) qui supporte les masses pour limiter leur rotation relative, un flasque circulaire en extension radiale (18) relié à côté de sa périphérie externe ou interne à la masse d'entrée (11), deux plateaux latéraux circulaires (21, 22) placés de chaque côté du flasque et reliés (30), au niveau de leur périphérie interne ou externe, à la masse de sortie (12), un moyen élastique s'étirant sur la circonférence et s'exerçant entre le flasque et les plateaux latéraux pour amortir la rotation relative entre les masses du volant moteur, et un moyen d'amortissement de friction (32) s'exerçant sur la circonférence entre les masses pour amortir ladite rotation relative, ledit moyen d'amortissement de friction comprenant un premier amortisseur de friction (21, 35, 41) qui opère pendant la rotation relative entre les masses du volant moteur sur une première plage angulaire, et comprend un ou plusieurs éléments de friction qui sont axialement comprimés en friction par un premier moyen élastique (40) s'exerçant dans l'axe, et un second amortisseur de friction (33, 34) qui opère avec le premier amortisseur de friction au-delà de la première plage angulaire de rotation relative entre les masses, et qui comprend un ou plusieurs éléments de friction supplémentaires axialement comprimés en friction par un second moyen élastique (39) s'exerçant dans l'axe, volant moteur **caractérisé en ce que** le moyen d'appui (14) est un palier lisse et **en ce que** le premier amortisseur de friction comprend un premier élément de friction (35) dont l'axe est incliné pour entrer en contact avec le plateau latéral (21) du côté du flasque (18) orienté vers le moteur, par le premier moyen élastique (40) s'exerçant dans l'axe entre le flasque (18) et ledit premier élément de friction (35).

2. Volant moteur à masses jumelées selon la revendication 1, **caractérisé en ce que** le second amortisseur de friction comprend des éléments de friction intercalés (33, 34), respectivement mobiles en rotation avec les plateaux latéraux (21, 22) et le flasque (18), et qui sont placés entre les plateaux latéraux (21, 22) et inclinés pour entrer en friction par le second moyen élastique (39) s'exerçant dans l'axe et également placé entre les plateaux latéraux.

3. Volant moteur à masses jumelées selon la revendication 1 ou 2, **caractérisé en ce qu'**un autre élément de friction supplémentaire (41) est prévu entre ledit un plateau latéral (21) et la masse de volant moteur associée (11), ledit un plateau latéral (21) étant incliné dans l'axe en direction de ladite une masse de volant moteur (11) par le premier moyen élastique s'exerçant dans l'axe (40), pour fournir une résistance à la friction supplémentaire qui fait partie du premier amortisseur de friction.
